# EUROPÄISCHE PATENTSCHRIFT

(11) **EP 3 744 800 B1**
(45) Veröffentlichungstag und Bekanntmachung des Hinweises auf die Patenterteilung: **23.09.2026**
(21) Anmeldenummer: 20169991.5
(22) Anmeldetag: 16.04.2020
(51) Int. Cl.: C09D 167/08, C08K 5/098

(54) **LÖSEMITTELHALTIGE EMULGIERTE ALKYDHARZ-BESCHICHTUNGSMASSE FÜR LASUR- UND LACKBESCHICHTUNGEN**
SOLVENT-CONTAINING EMULSIFIED ALKYD RESIN COATING COMPOSITION FOR GLAZE AND LACQUER COATINGS
COMPOSITION DE REVÊTEMENT EN RÉSINE D'ALKYDE ÉMULSIFIÉ CONTENANT UN SOLVANT POUR REVÊTEMENTS DE PEINTURE LASURE ET DE VERNIS

(30) Priorität: 29.05.2019 US 201962853859 P
(43) Veröffentlichungstag der Anmeldung: 02.12.2020
(73) Patentinhaber: STO SE & Co. KGaA, 79780 Stühlingen (DE)
(72) Erfinder: MEHARI, Sem, 68163 Mannheim (DE)
(74) Vertreter: Gottschalk, Matthias

(56) Entgegenhaltungen:
- EP-A1- 3 377 570
- WO-A1-2012/079624
- WO-A1-2012/093250
- DE-A1- 102005 008 335

## Beschreibung

Die vorliegende Erfindung betrifft eine lösemittelhaltige emulgierte einkomponentige Beschichtungsmasse für Lasuren und Lackbeschichtungen auf Alkydharz-Basis und ein Beschichtungssystem enthaltend diese lösemittelhaltige emulgierte Beschichtungsmasse. Auch stellt die erfindungsgemäße Beschichtungsmasse ab auf eine Beschichtung gebildet aus der erfindungsgemäßen Beschichtungsmasse sowie die Verwendung dieser lösemittelhaltigen emulgierten Beschichtungsmassen für die Herstellung von Lasuren und Lackbeschichtungen.

Lackbeschichtungen für Innen- und Außenanwendungen, beispielsweise auf Metall -oder Holzsubstraten, haben vielfältigen Anforderungen zu genügen. Wünschenswert ist neben einer ansprechenden Optik auch eine hinreichende Widerstandsfähigkeit gegenüber mechanischen Einflüssen. Auch sollen Wettereinflüsse nicht zu Beeinträchtigungen führen. Darüber hinaus wird regelmäßig gefordert, dass sich die diese Beschichtungen liefernden Beschichtungsmassen einfach und unproblematisch applizieren lassen und zudem zügig unter Ausbildung einer glatten, hochwertigen Oberfläche abtrocknen. Insbesondere für Anwendungen in Innenräume wird verstärkt nach Beschichtungsmassen verlangt, die sich durch einen geringen VOC-Gehalt auszeichnen und insbesondere auch geruchsarm sind.

Lösungsmittelhaltige Alkydharzbeschichtungen sind im Stand der Technik bekannt. Sie dienen zum Beispiel zur Weiss- oder Farblackierung an Bauwerken und Oberflächen und dgl., im Innen- wie auch Aussenbereich. Sie sollen einfach und gleichmässig auftragbar sein, schnell und homogen trocknen und dabei eine glatte, ungestörte Oberfläche ausbilden. Insbesondere sollen sie den gewünschten Farbton auch langfristig zeigen, also nicht zu Vergilbung und Verfärbung neigen.

Ein Lösungsmittel im Sinne der Erfindung ist jedes für Alkydharz-Zusammensetzungen geeignete Lösungsmittel ausser Wasser.

Bekannte lösungsmittelhaltige Beschichtungsmassen auf Basis von Alkydharzen enthalten wenigstens ein organisches Lösungsmittel, aber keine relevanten Anteile an Wasser.

Die WO 2012093250 A1 offenbart nahezu wasserfreie, lösemittelhaltige Beschichtungsmassen enthaltend ein oxidativ trocknendes langöliges Alkydharz, einen Primärtrockner basierend auf einer Komplexverbindung des Eisens, einen Emulgator, sowie ein organisches Lösemittel.

Alternativ können Beschichtungsmassen als wässrige Systeme konzipiert sein, bekannt sind zum Beispiel wasserverdünnbare Holzschutzanstriche auf Alkydharzbasis. Die bekannten wässrigen Systeme enthalten in der Regel auch organische Lösungsmittel, jedoch in geringeren Mengen.

Sowohl wasser- als auch lösemittelbasierte Alkydharz-Beschichtungsmassen müssen hinsichtlich ihres Gehalts an flüchtigen organischen Stoffen die Decopaint-Richtlinie (Europäische Richtlinie 2004/42/EG) einhalten.

Das Trocknen lösemittelhaltiger Beschichtungsmassen beruht regelmäßig auf physikalischen und chemischen Trocknungs- bzw. Aushärtungsprozessen. Zwecks Initiierung und Forcierung der chemischen, d.h. oxidativen Trocknung mittels Luftsauerstoff setzt man häufig organische Kobaltsalze als sogenannte Primärtrockner zu. Angesichts immer strenger werdender gesetzlicher Vorgaben stellt sich u.a. die Frage, ob derartige Kobalt-basierte Trockner (Sikkative) zukünftig in lösemittelhaltigen Beschichtungsmassen aus toxikologischen Gründen noch verwendet werden können. Darüber hinaus ist bekannt, dass bei Einsatz derartiger Primärtrockner während des oxidativen Trocknungsprozesses Aldehyde freigesetzt werden. Diese Aldehyde bzw. deren Abbauprodukte tragen mitunter zu einer Geruchsbelästigung bei und sind nicht selten auch aus gesundheitlicher Sicht zuweilen problematisch.

Darüber hinaus verursacht der Einsatz organischer Kobaltsalze als Sikkative besonders bei weißen oder sehr hellen Farbtönen oft beim Trocknen eine gelbliche oder grünliche Farbveränderungen. Als eine Alternative für die Kobalt-Sikkative ist die Verwendung von auf Mangan-basierende Sikkative bekannt. Mangan-Sikkative haben jedoch den Nachteil, dass sie zu Farbtonveränderungen hin zu rötlichen oder rosa Verfärbungen führen können.

Gesundheitlich unbedenkliche, auf Eisen-basierende Primärtrockner führen nicht zu unerwünschten Farbtonveränderungen. Jedoch haben Eisen-Sikkative den Nachteil, dass mit ihnen in Zusammenhang mit den bekannten lösungsmittelhaltigen (wasserfreien) Alkydharz-Systemen keine günstige Trocknungszeiten erreicht werden. Die Trocknungszeiten sind - besonders bei langöligen Alkyden - viel zu lang und für eine praxisgerechte Anwendung nicht akzeptabel.

Ferner werden in solchen Beschichtungsmassen oft Siliziumdioxid - basierte Mattierungsmittel eingesetzt. Siliziumdioxid (SiO2) kann auch aus anderen Gründen in solchen Beschichtungsmassen enthalten sein. Dies ist aus den nachstehend genannten Gründen nachteilig.

Es wäre daher wünschenswert, auf lösemittelhaltige Beschichtungsmassen zurückgreifen zu können, die nicht mehr mit den Nachteilen des Stands der Technik behaftet sind.

Der vorliegenden Erfindung lag daher die Aufgabe zugrunde, lösemittelhaltige Beschichtungsmassen für Lackbeschichtungen und Lasuren, insbesondere für Bautenlacke oder Bestandteile hiervon, verfügbar zu machen, die Beschichtungen liefern, die schadstoff - und/oder geruchsarm schnell trocknen und sich im Farbton, v.a. Weißfarbton, nicht verändern und die vorzugsweise auf vielfältigen Substratunterlagen leicht appliziert werden können und sich auch für Innenanwendungen eignen.

Es wurde nun gefunden, dass sich die Nachteile der bekannten Beschichtungssysteme überwinden lassen, wenn statt Kobalt- oder Mangan-basierten Sikkativen solche Sikkative eingesetzt werden, die auf Eisen bzw. Eisenverbindungen basieren.

Dem stand die Beobachtung entgegen, dass Eisen-basierte Sikkative in lösungsmittelhaltigen (wasserfreien) Alkydharz-Beschichtungssystemen zu langen Trocknungszeiten führen. Eisen-Sikkative funktionieren jedoch einigermaßen gut in wasserbasierten Alkydharz-Lacken und erzeugen dort zufriedenstellende Trocknungszeiten. Ein Einfluss der Polarität des Wassers als Lösungsmittel auf die Wirksamkeit des Sikkatives kann hier vermutet werden.

Solche wässrigen Systeme haben aber andere, meist schlechtere Eigenschaften hinsichtlich der Applikation, Optik und Schutzfunktion, so dass sie sich als Ersatz für lösemittelbasierte Alkydharz-Beschichtungsmassen, die generell keine relevanten Wassergehalte haben, nicht immer eignen.

Es hat sich jedoch überraschend gezeigt, dass die Verwendung von Eisen-basierten Sikkativen auch in lösungsmittelhaltigen Beschichtungsmassen auf Alkydharz-Basis zu keinen Nachteilen bei der Trocknungszeit führt, und zwar dann, wenn die Beschichtungsmasse einen Mindestgehalt an Wasser aufweist. Zur Lösung dieser Aufgabe wird die lösungsmittelhaltige Alkydharz-Beschichtungsmasse mit einem Gehalt an Wasser versehen, der höher ist als im Stand der Technik und vorzugsweise mindestens 4,0 Gew.%, bezogen auf das Gesamtgewicht der Beschichtungsmasse, ausmacht. Vorzugsweise wird diese lösungsmittelhaltige Alkydharz-Beschichtungsmasse in eine "Wasser-in-Öl - Emulsion" überführt.

Demgemäß richtet sich die Erfindung auf eine lösemittelhaltige emulgierte einkomponentige Beschichtungsmasse gemäß Anspruch 1.

Die Wirkung der Primärtrockner beruht auf dem redoxaktiven Durchlaufen eines Katalysezyklus, bei dem die Metallkationen mehrere Oxidationsstufen annehmen, und aus dem Luftsauerstoff über Peroxide Radikale gebildet werden.

Bei Eisen-Primärtrocknern funktionieren diese Redoxvorgänge meist in wasserhaltigen und wässrigen (polaren) Systemen gut, dagegen in lösungsmittelhaltigen (wasserfreien) Systemen schlecht bis gar nicht.

Geeignete Primärtrockner basierend auf Eisen umfassen organische Salze des Eisens sowie auch Metallseifen des Eisens. Hierbei stellen bevorzugte Metallseifen Salze auf der Basis von kationischen Eisenspezies und Fettsäuren, insbesondere synthetischen Fettsäuren, dar. Exemplarisch seien unter den geeigneten Fettsäuren Hydroxystearate, Behenate, Arachinate, Palmitate und Laurate genannt.

Geeignete Komplexverbindungen des Eisens, insbesondere Komplexsalze, basieren z.B. auf 3,7-Diaza-bicyclo[3.3.1]nonan-Liganden. Exemplarisch sei als besonders geeignet Eisen(2+)-chloro(dimethyl-9,9-dihydroxy-3-methyl-2,4-di-(2-pyridyl)-7-(pyridin-2-ylmethyl)-3.7-diazabicyclo[3.3.1]nonan-1,5-dicarboxylat)-chlorid genannt. Dessen Herstellung ist in WO 2011095308 A1 offenbart.

Auf Eisen basierende Primärtrockner sind kommerziell erhältlich, beispielsweise von der Herstellerfirma Borchers GmbH.

Der Gehalt an Eisen-Primärtrockner liegt generell (in Bezug auf Metallanteil) bei 0,0001 - 0,3 Gew.%, besser 0,0001 - 0,1 Gew.% , noch besser 0,0001 - 0,05 Gew.%.

Es hat sich gezeigt, dass in lösungsmittelhaltigen einkomponentigen Beschichtungsmassen auf Alkydharzbasis bei Verwendung eines Sikkativs umfassend mindestens ein organisches Salz des Eisens und/oder eine Komplexverbindung des Eisens, mit mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz, bei guter Trocknungsleistung sehr geruchsarme und verfärbungsfreie Beschichtungen erhalten werden können.

Besonders gute Trocknungsleistungen kombiniert mit ausgeprägter Farbtonstabilität der Beschichtungen gehen im Allgemeinen einher mit der Verwendung von mindestens einem Eisen-Primärtrockner zusammen mit mindestens einem ersten Sekundärtrockner vorzugsweise umfassend mindestens ein organisches und/oder anorganisches Salz oder eine Verbindung des Zirkoniums, Magnesiums, Calciums, Strontiums, Bariums, Zinks, Lithiums oder Aluminiums.

Der Gehalt an Sekundärtrockner liegt generell (in Bezug auf Metallanteil) bei 0,01 - 3,0 Gew.%, besser 0,05 - 2,0 Gew.% , noch besser 0,1 - 1,6 Gew.%., bezogen auf das Gesamtgewicht der Beschichtungsmasse. Bei Verwendung eines ersten und eines zweiten Sekundärtrockners liegen deren Gehalte jeweils bei der Hälfte dieser Werte.

Die erfindungsgemäßen Beschichtungsmassen umfassen mindestens einen zweiten Sekundärtrockner umfassend oder bestehend aus mindestens einem organischen Salz des Calciums, Zirkoniums und einer beliebigen Mischung davon. Besonders zufriedenstellende Resultate stellen sich regelmäßig bei Verwendung eines organischen Salzes des Calciums als sogenannter "Durchtrockner" neben einem organischen Salz des Zirkoniums, einem sogenannten "Hilfstrockner", ein.

Dabei kann in einer besonders geeigneten Ausgestaltung vorgesehen sein, dass das organische Salz der Sekundärtrockner Neodecanoate, Oleate, Stearate, Palmitate, Octoate und /oder Naphthenate, insbesondere Neodecanoate, umfasst, besonders bevorzugt Zirkoniumneodecanoate.

Die erfindungsgemäßen Zusammensetzungen sind vorzugsweise im Wesentlichen frei von Cobalt- und Manganverbindungen, besonders von Sikkativen auf Basis von Cobalt und Mangan. "Im Wesentlichen" bedeutet hier vorzugsweise Cobalt- und Mangan-Gehalte (in Bezug auf Metallanteil) von unterhalb 0.01 Gew.%, spezieller von weniger als 0.001 Gew.%, bezogen auf das Gesamtgewicht der Zusammensetzung. Besonders bevorzugt enthalten die Zusammensetzungen keine mit üblichen analytischen Verfahren wie EDX, WDX und/oder AAS nachweisbaren Gehalte an Cobalt- oder Mangan-Verbindungen.

Für das oxidativ trocknende organische Bindemittel greift man bevorzugt zurück auf solche Bindemittel, die ausgewählt sind aus der Gruppe aus mindestens einem oxidativ trocknenden mittelöligen und/oder langöligen Alkydharz, insbesondere einem oxidativ trocknenden langöligen Alkydharz, mindestens einem oxidativ trocknenden modifizierten, insbesondere isocyanatmodifizierten oder aminmodifizierten mittelöligen und/oder langöligen Alkydharz, insbesondere einem oxidativ trocknenden modifizierten langöligen Alkydharz, und einer beliebigen Mischung hiervon.

Der Alkydharzgehalt der Zusammensetzung liegt, ggf. einschliesslich thixotropem Alkydharz, generell bei 10 - 80 Gew.%, besser 12 - 60 Gew.% , noch besser 14 - 50 Gew.%, bezogen auf Gesamtgewicht der Zusammensetzung.

In einer besonders zweckmäßigen Ausgestaltung wird auf die oxidativ trocknenden langöligen Alkydharze zurückgegriffen. Unter einem langöligen Alkydharz sollen im Sinne der vorliegenden Erfindung solche langöligen Systeme verstanden werden, die einen Ölgehalt bzw. eine Öllänge oberhalb von 60% aufweisen. Unter einem kurzöligen Alkydharz soll demgegenüber eine solche kurzölige Verbindung verstanden werden, die über einen Ölgehalt bzw. eine Öllänge regelmäßig im Bereich von 20-40% liegt. Unter dem Ölgehalt bzw. der Öllänge soll hierbei in Bezug auf das Gesamtgewicht des Alkydharzes der gewichtsprozentige Anteil derjenigen Fettsäuren, einschließlich Polyolrest verstanden werden, die mit den Hydroxylgruppen der Polyoleinheit im Alkydharz verbunden vorliegen. Im Sinne der vorliegenden Erfindung werden dadurch die Begriffe "Ölgehalt" und "Öllänge" synonym verwandt.

Besonders geeignete erfindungsgemäße Beschichtungsmassen enthalten ferner neben dem mindestens einem oxidativ trocknenden organischen Bindemittel, ausgewählt aus der Gruppe bestehend aus mindestens einem oxidativ trocknenden mittelöligen und/oder langöligen Alkydharz , mindestens ein oxidativ trocknendes modifiziertes mittelöliges und / oder langöliges Alkydharz. Bevorzugte oxidativ trocknende modifizierter mittelölige und langölige Alkydharze können dabei ausgewählt sein aus der Gruppe bestehend aus silikonisierten Alkydharzen, acrylierten Alkydharzen, Isocyanat-modifizierten Alkydharzen und beliebigen Mischungen hiervon.

Des Weiteren kann im Zusammenhang mit dem Langölanteil der oxidativ trocknenden langöligen Alkydharze vorgesehen sein, dass diese auf Linolsäure, Linolensäure und / oder Ölsäure basieren, gegebenenfalls unter Zusatz von Palmitinsäure. Unter den oxidativ trocknenden langöligen Alkydharzen sind diejenigen besonders bevorzugt, um die der Erfindung zugrunde liegenden Aufgabe zu lösen die, ermittelt gemäß DIN 53241-1, eine Jodzahl nicht größer als 120, insbesondere nicht größer als 100, bevorzugt im Bereich von 20 bis 120 oder 20 bis 100, bevorzugt im Bereich von 40-80 aufweisen, jeweils bezogen auf 100% Festkörper des Bindemittels.

Die lang- / mittelöligen Alkydharze werden häufig gelöst in Kohlenwasserstoffen, insbesondere in entaromatisieren oder isoparaffinische Kohlenwasserstoffen, in den erfindungsgemäßen Beschichtungsmassen eingesetzt.

Als Lösemittel für die erfindungsgemäße lösemittelhaltige Beschichtungsmasse wird bevorzugt mindestens ein, insbesondere im Wesentlichen aromatenfreier, aliphatischer Kohlenwasserstoff eingesetzt, vorzugsweise aus der Gruppe bestehend aus, insbesondere entaromatisiertem Testbenzin, n-Paraffinen, Isoparaffinen, Cycloparaffinen und beliebigen Mischungen Mischungen hiervon. Gegebenenfalls kann auch Methoxypropoxypropanol als Co-Lösemittel zugegeben werden. Besonders bevorzugt kommen entaromatisierte aliphatische Kohlenwasserstoffe zum Einsatz. Das Lösemittel liegt in der erfindungsgemäßen Beschichtungsmasse üblicherweise in einer Menge im Bereich von 10 bis 40 Gew. %, vorzugsweise im Bereich von 15 bis 45 Gew. % vor. Häufig wird insbesondere zur Verbesserung der Verdünnungseigenschaften und zwecks Erhalts einer guten Verarbeitungsviskosität Methoxypropoxypropanol als Co-Lösemittel zugesetzt, beispielsweise in einer Menge im Bereich von 0,5 bis 8 Gew. %, vorzugsweise im Bereich von 1 bis 5 Gew. %.

Als aromatenfrei im Sinne der vorliegenden Erfindung sollen solche Lösemittel bzw. Kohlenwasserstoffe verstanden werden, die gemäß der Definition TRGS900 zur TRGS 900 Gruppe 1 gehören. Gemäß der VDL Richtlinie Bautenanstrichstoffe (Richtlinie zur Deklaration von Inhaltsstoffen in Bautenlacken, Bautenfarben und verwandten Produkten ) VDL-RL01 (6.Revision) des Verbands der deutschen Lack- und Druckfarbenindustrie e.V. sollen insbesondere auch solche Lösemittel bzw. aliphatische Kohlenwasserstoffe aromatenfrei im Sinne der vorliegenden Erfindung verstanden werden, die zu Beschichtungen aus den erfindungsgemäßen Beschichtungsmassen führen, welche einen Aromatengehalt kleiner 1 Gew.%, bestimmt nach DIN 55683, aufweisen. Ganz bevorzugt sollen im Sinne der vorliegenden Erfindung unter aromatenfrei solche Lösemittel bzw. aliphatischen Kohlenwasserstoffe verstanden werden, die einen Aromatengehalt kleiner 0,2 Gew.% vorzugsweise kleiner 0,1 Gew.% besitzen.

Die Zusammensetzung enthält mindestens einen Emulgator, bevorzugt einen polymeren Emulgator und besonders bevorzugt einen Emulgator auf Basis eines filmbildenden Polysaccharidharzes. Solche Emulgatoren werden u. a. deshalb bevorzugt, weil sie "biobasiert" sind, also auf in der Natur vorkommenden Stoffen beruhen oder solchen Stoffen ähneln. Zudem handelt es sich bei solchen Emulgatoren um Feststoffe, die nicht selbst als VOC emittiert werden können oder einen Beitrag zu VOC-Emissionen leisten. Sie werden fest in der Matrix eingebaut und somit praktisch "einpolymerisiert". Der Einsatz solcher polymeren, vorzugsweise filmbildenden Emulgatoren ermöglicht es, in vorteilhafter Weise den VOC-Gehalt der Beschichtung zu senken, da das Alkydharz-System jetzt mit Wasser verdünnt werden kann und so ein Teil des Lösemittels durch Wasser ersetzt werden kann.

Gleichzeitig verringert der Einsatz dieser Emulgatoren die Neigung des Alkydprodukts zum Vergilben.

Geeignete solche Emulgatoren sind z. B. unter der Bezeichnung Lorama LPR erhältlich.

Diese Emulgatoren liegen vorzugsweise als kolloidale Dispersion (fest-in-flüssig) vor. Der Feststoffgehalt in der Dispersion liegt generell zwischen 15 und 60 Gew.%, vorzugsweise zwischen 18 und 50 Gew.% und besonders bevorzugt zwischen 30 und 48 Gew.%.

Der Emulgator wird vorzugsweise in einer Einsatzmenge von 0,1 - 10 Gew.%, besser 0,2 - 8 Gew.%, noch besser 0,25 - 5 Gew.%, bezogen auf die Gesamtmenge der Zusammensetzung, verwendet.

Die Zusammensetzung enthält Wasser zur Bildung einer 'Wasser-in-Öl - Emulsion', der Wassergehalt liegt erfindungsgemäß bei 2 - 40 Gew.%, besser bei 3 - 35 Gew.%, noch besser bei 4 - 30 Gew.%, am besten bei 4 - 10 Gew.%.

Vorteilhafte erfindungsgemäße Beschichtungsmassen zeichnen sich auch dadurch aus, dass sie ferner mindestens ein Hautverhinderungsmittel enthalten. Die Hautverhinderungsmittel wirken üblicherweise als Reduktions- oder Komplexierungsmittel und verhindern die frühzeitige Aushärtung der Beschichtungsmasse an der Oberfläche in den Gebinden. Bevorzugte Hautverhinderungsmittel können dabei ausgewählt werden aus der Gruppe bestehend aus substituierten Phenolen, Dialkylaminoethanol, insbesondere Dimethylaminoethanol und/oder Diethylaminoethanol, Dialkylhydroxylamin, insbesondere Dimethylhydroxylamin und/oder Diethylhydroxylamin, Dibenzylhydroxylamin, Hydroxylamin, Diethylamin, Triethylamin, Ketoxime, insbesondere Acetonoxim, Butanonoxim, Pentanonoxim und beliebigen Mischungen hiervon.

Der Gehalt an Hautverhinderungsmittel, Mattierungsmittel, Lichtschutzmittel, Radikalfänger, etc. in der Zusammensetzung liegt generell bei 0,1 - 8,0 Gew.%, besser 0,2 - 6,0 Gew.% , noch besser 0,3 - 5,0 Gew.%, bezogen auf das Gesamtgewicht der Zusammensetzung.

Für einige Anwendungen hat es sich als zweckmäßig erwiesen, die erfindungsgemäße Beschichtungsmasse mit mindestens einem Rheologiemodifizierungmittel auszustatten. Bevorzugt werden keine Verdicker eingesetzt ausgewählt aus der Gruppe bestehend aus modifizierten und unmodifizierten Schichtsilikaten, wie Bentoniten. Bevorzugt wird unter den Rheologiemodifizierungsmitteln auf thixotrope Alkydharze zurückgegriffen.

Unter thixotropen Alkydharzen im Sinne der vorliegenden Erfindung fallen z.B. solche Alkydharze, die aus einer partiellen Umsetzung von Polyamiden aus polymeren Fettsäuren und Polyaminen mit Alkylharzen herrühren, sogenannte Polyamid-modifizierte Alkydharze**.** Ferner können Polyharnstoff-modifizierte Alkydharze, auch Polyharnstoffthixotropierte Alkydharze genannt, als thixotrope Alkydharze im Sinne der Erfindung eingesetzt werden. Exemplarisch sei auf geeignete thixotrope Alkydharze verwiesen, wie sie in der EP 922738B1 beschrieben sind. Mithilfe dieser Rheologiemodifizierungsmittel, insbesondere mithilfe von thixotropierten Alkydharzen lässt sich die Standfestigkeit der mit den erfindungsgemäßen Beschichtungsmassen erhaltenen Beschichtungsfilme nochmals verbessern.

Der Gehalt an thixotropem Alkydharz liegt generell bei 0,1 - 20 Gew.%, besser 0,5 - 15 Gew.% , noch besser 1,0 - 12 Gew.%, bezogen auf Gesamtgewicht der Zusammensetzung, vorzugsweise als Teil des Gesamtgehaltes an Alkydharz.

Für eine Reihe von Anwendungen können die erfindungsgemäßen Beschichtungsmassen ferner über mindestens einen Füllstoff verfügen insbesondere ausgewählt aus der Gruppe bestehend aus Carbonaten, insbesondere Calciumcarbonat, Magnesiumcarbonat und Dolomit, Sulfaten, insbesondere Bariumsulfat, und Oxiden wie Aluminiumoxid sowie deren Mischungen davon.

Nun hat sich aber gezeigt, dass v.a. bei niedrigen Wassergehalten auch die Anwesenheit von SiO2 und SiO2-basierten Verbindungen sich als störend in Hinblick auf die Trocknungszeiten erweist. Die Eisen-Sikkative wirken nicht mehr so effektiv wie erwartet, die Trocknungszeiten verlängern sich deutlich. An der Oberfläche von SiO2-Partikeln, beispielsweise von amorphen Kieselsäuren, scheint die Reversibilität der Oxidations- und Reduktionsprozesse des Eisens in seinen verschiedenen Oxidationsstufen behindert oder gar blockiert zu sein. Es ist bekannt, dass die Oxidationsstufe 3 des Eisens an SiO2-Oberflächen stabilisiert werden kann. Eine Reduktion zu Fe(II) ist erschwert.

Erst bei größerer Wasser-Zugabe zur lösemittelhaltigen Alkydharz-Beschichtungszusammensetzung scheinen die SiO2-Oberflächen zumindest teilweise "deaktiviert" zu werden, so dass die unerwünschten Wechselwirkungen zwischen dem Eisen-Sikkativ und der SiO2-Oberfläche vermindert werden.

Aufgrund dieser Wechselwirkung der Eisen-Sikkative mit SiO2-Oberflächen sind die erfindungsgemäßen Beschichtungsmassen deshalb bevorzugt im Wesentlichen frei von auf Siliziumdioxid-basierenden, amorphen Füllstoffen wie Kieselsäure, Kieselgel, amorphes SiO2, Mikrosilica und / oder Gläser, die auch als Mattierungsmittel eingesetzt werden. Vorteilhaft ist es auch, wenn keine auf SiO2-basierenden, kristallinen Füllstoffe wie Quarz oder Cristobalit enthalten sind, wenn diese Füllstoffe in sehr feiner Form vorliegen, d.h. mit einem mittleren Teilchengrößenwert D50 von kleiner 10 µm (bestimmt nach ISO 13320). Ähnliches gilt für andere silikatische Füllstoffe, insbesondere Silikate, sowie Feldspat, Pyrophyllit und Serpentin sowie deren Mischungen, wenn deren Siliziumdioxid-Gehalt größer als 60 Gew.% bezogen auf die Molmasse des silikatischen Füllstoffs ist.

"Siliziumdioxid-basierend" im Sinne dieser Erfindung heißt ein SiO2-Gewichtsanteil von größer 90 Gew.% bezogen auf die Gesamtmolmasse des betreffenden Stoffes. "Im Wesentlichen frei" heißt in diesem Zusammenhang kleiner 1,0 Gew.% bezogen auf das Gesamtgewicht der Beschichtungsmasse, besser kleiner 0,5 Gew.% bezogen auf das Gesamtgewicht der Beschichtungsmasse, noch besser kleiner 0,1 Gew.% bezogen auf das Gesamtgewicht der Beschichtungsmasse, am besten unter der analytischen Nachweisgrenze beispielsweise mittels XRD und/oder EDX.

Für eine Reihe an Ausführungsformen der erfindungsgemäßen Beschichtungsmassen lassen sich mit diesen matte Beschichtungen erhalten. Vielfach hat es sich jedoch als vorteilhaft erwiesen, ein mattes Erscheinungsbild der Beschichtungsoberfläche dadurch zu erhalten, dass man der erfindungsgemäßen Beschichtungsmasse ferner mindestens ein Mattierungsmittel zugibt. Als Mattierungsmittel werden im Allgemeinen häufig Kieselsäure, insbesondere Fällungskieselsäure, pyrogene Kieselsäure, amorphe Kieselsäure und besonders bevorzugt nachbehandelte Fällungskieselsäure verwendet. Diese Kieselsäuren sollten aus den bereits geschilderten Gründen in der erfindungsgemäßen Beschichtungsmasse nicht enthalten sein. Die erfindungsgemäße Beschichtungsmasse soll im Rahmen der analytischen Nachweisgrenze frei von diesen SiO2-Verbindungen sein. Als Mattierungsmittel eignen sich bevorzugt Wachse, insbesondere Polyolefin-Wachse wie Polyethylen- oder Polypropylen-Wachse, vorzugsweise mit einer Teilchengröße D90, bestimmt nach ISO 13320, im Bereich 5 - 15 µm. Solche Wachse werden mit Gehalten von 0,2 - 7,5 Gew.%, besser 0,3 - 5,5 Gew.%, noch besser 0,4 - 4,5 Gew.%, bezogen auf das Gesamtgewicht der Zusammensetzung, eingesetzt.

Zwecks geeigneter Farbeinstellung sind die erfindungsgemäßen Beschichtungsmassen in der Regel alternativ oder zusätzlich auch mit mindestens einem Farbmittel versetzt. Unter den Farbmitteln greift man bevorzugt auf Pigmente (Weiß- oder Buntpigmente) zurück. Unter den Weißpigmenten ist Titandioxid bevorzugt.

Der Gehalt an Pigmenten / Farbstoffen liegt generell bei 0,1 - 50 Gew.%, besser 0,2 - 45 Gew.% , noch besser 0,5 - 40 Gew.%, bezogen auf das Gesamtgewicht der Zusammensetzung.

Erfindungsgemäße Zusammensetzungen weisen vorzugsweise eine Pigment-Volumen-Konzentration (PVK) gemäß EN ISO 4618-1 von 0 bis 50%, mehr bevorzugt 2 bis 45%, besonders bevorzugt 4 bis 40 % auf.

In einer zweckmäßigen Ausgestaltung der erfindungsgemäßen Beschichtungsmassen sind die Additive ausgewählt aus der Gruppe bestehend aus Entschäumern, Entlüfter, Verdickern, Lichtschutzmittel, Radikalfängern, Netz- / Dispergiermitteln, Gleit- / Verlaufsadditiven, Oberflächenadditiven, insbesondere Silikonoberflächenadditiven, beispielsweise polyethermodifiziertes Polymethylalkylsiloxan und /oder Silikonpolyether-Copolymere und/oder oberflächenaktive Polyacrylate, Wachse und /oder oberflächenaktive Polyacrylate und beliebigen Mischungen dieser Verbindungen.

Als geeignete Lichtschutzmittel kann man sogenannte HALS-Verbindungen (hindered amine light stabilizers) verwenden. Diese Verbindungen ermöglichen häufig eine sehr gute Wetterstabilität und nicht selten geht mit diesen auch eine reduzierte Kreidungsneigung einher. Lichtschutzmittel können z.B. in einer Menge im Bereich von 0,1 bis 2,0 Gew.%, vorzugsweise im Bereich 0,2 bis 1,0 Gew.%, jeweils bezogen auf das Gesamtgesicht der Beschichtungsmasse eingesetzt werden.

Netz- und Dispergiermittel können den erfindungsgemäßen Beschichtungsmassen zugesetzt werden, um die Pigmente und /oder Füllstoffe zu stabilisieren und um beispielsweise ein Sedimentieren von Pigmenten und Füllstoffen zu verhindern. Netz- und Dispergiermittel tragen regelmäßig dazu bei, dass die Pigmente und / oder Füllstoffe nicht reagglomerien. Über den Zusatz an Netz- und Dispergiermitteln kann man zu einer verbesserten Lagerstabilität gelangen. Auch kann die Dispergierbarkeit verbessert werden, indem man mit Hilfe von Netz- und Dispergiermitteln die Pigmente stabilisiert bzw. eine Agglomeration verhindert. Des Weiteren können die Netz- und /oder Dispergiermittel zum Beispiel zu einem verbesserten Deckvermögen verhelfen. Geeignete Netzmittel umfassen beispielsweise die Salze ungesättigter Polyamide und / oder die Salze von sauren Polyestern, insbesondere von niedermolekularen sauren Polyestern.

Als Entschäumer können beispielsweise Polysiloxane eingesetzt werden. Geeignete schaumzerstörende bzw. schaumunterbindende Polysiloxane sind dem Fachmann bekannt.

Die erfindungsgemäßen Beschichtungsmassen eignen sich vor allem für den Einsatz als Bautenlacke oder als Bestandteil hiervon. Es kann sich bei der erfindungsgemäßen Beschichtungsmasse um eine Grundierung, Decklackbeschichtungsmasse oder eine transparente oder semitransparente Endbeschichtungsmassen oder einen Bestandteil hiervon handeln. Diese Beschichtungsmassen kommen im Innen- und /oder Außenbereich zum Einsatz.

Die erfindungsgemäße Beschichtungsmasse kann als sogenannte 1-Topf-Beschichtungsmassen eingesetzt werden. Sie kann dabei sowohl als Grundierung, als auch als Mittelschicht als auch als Schlussbeschichtung verwendet werden.

Von besonderem Vorteil ist auch, dass die erfindungsgemäßen Beschichtungsmassen vollständig ohne Sikkative auf Kobalt- und/oder Bleibasis auskommen, gleichwohl ein hervorragendes Trocknungsprofil zeigen. Mit den erfindungsgemäßen Beschichtungsmassen gelangt man zu sehr lagerstabilen Systemen, die auch nach längerer Lagerzeit nicht zur Gelierung neigen.

Die erfindungsgemäße Beschichtung hat eine durchschnittliche, insbesondere absolute Trockenschichtdicke, bestimmt nach DIN EN ISO 2808-2 (Mai 2017) nicht oberhalb von 100 µm, bevorzugt nicht oberhalb von 80 µm und besonders bevorzugt im Bereich von 5 bis 60 µm.

Die erfindungsgemäße lösemittelhaltige emulgierte Beschichtungsmasse kann in einer für den Fachmann gängigen 1-Topf-Reaktion hergestellt werden. Die Komponenten werden dazu in geeigneter Reihenfolge in einem Reaktionsgefäß gemischt.

In einer bevorzugten Ausführungsform wird jedoch ein Teil des Alkydharz-Bindemittels in eine separate wässrige Emulsion überführt, so dass eine Wasser-in-Öl - Emulsion als Halbfabrikat oder Vorprodukt entsteht. Diese Emulsion wird dann mit einer herkömmlichen lösungsmittelhaltigen (wasserfreien) Alkydharz-Formulierung zur Bildung der erfindungsgemäßen Beschichtungsmasse vereinigt. Die Wasser-in-Öl - Emulsion als Halbfabrikat enthält das Alkydharz, Lösemittel, Emulgator und Wasser sowie ggf. Additive wie Entschäumer und Entlüfter, etc. Das Halbfabrikat ist lagerstabil und kann auf Vorrat hergestellt werden.

Zusammensetzung Beschichtungsmasse allgemein:
Alkydharz
   10 - 80 Gew.%, besser 12 - 60 Gew.% , noch besser 14 - 50 Gew.% Alkydharz thixotrop
   0,1 - 20 Gew.%, besser 0,5 - 15 Gew.% , noch besser 1,0 - 12 Gew.% Füllstoffe
   0 - 40 Gew.%, besser 0 - 35 Gew.% , noch besser 0 - 30 Gew.% Pigmente / Farbstoffe
   0,1 - 50 Gew.%, besser 0,2 - 45 Gew.% , noch besser 0,5 - 40 Gew.% Additive: Netz- / Dispergiermittel, Entlüfter, Entschäumer, Gleit- / Verlaufsadditive, Hautverhinderungsmittel, Mattierungsmittel, Lichtschutzmittel, Radikalfänger, etc.
   0,1 - 8,0 Gew.%, besser 0,2 - 6,0 Gew.% , noch besser 0,3 - 5,0 Gew.% Lösemittel
   1,0 - 40 Gew.%, besser 2,0 - 35 Gew.% , noch besser 3,0 - 30 Gew.% Eisen-Primärtrockner (in Bezug auf Metallanteil)
   0,0001 - 0,3 Gew.%, besser 0,0001 - 0,1 Gew.% , noch besser 0,0001 - 0,05 Gew.%
Sekundärtrockner (in Bezug auf Metallanteil)
   0,01 - 3,0 Gew.%, besser 0,05 - 2,0 Gew.% , noch besser 0,1 - 1,6 Gew.% Wasser
   2 - 40 Gew.%
Emulgator
   0,1 - 10 Gew.%, besser 0,2 - 8 Gew.%, noch besser 0,25 - 5 Gew.%.

### Ausführungsbeispiel 1:

### Weißlack seidenmatt: erfindungsgemäß

| | |
|---|---|
| Alkydharz | 20 Gew.% |
| Alkydharz thixotrop | 2 Gew.% |
| Wasser | 8 Gew.% |
| Emulgator | 1 Gew.% |
| Füllstoffe | 16 Gew.% |
| Pigmente / Farbstoffe | 32 Gew.% |
| Additive: Netz- / Dispergiermittel, Entlüfter, Entschäumer, Gleit- / Verlaufsadditive, Hautverhinderungsmittel, Lichtschutzmittel, Radikalfänger, etc. | 4,8 Gew.% |
| Mattierungsmittel (PE-Wachs) | 3,0 Gew.% |
| Lösemittel | 12,8 Gew.% |
| Eisen-Primärtrockner (in Bezug auf Metallanteil) | 0,0003 Gew.% |
| Zirconium-Sikkativ (Hilfstrockner) | 0,2 Gew.% |
| Calcium-Sikkativ (Durchtrockner) | 0,2 Gew.% |

### Weißlack seidenmatt: Referenzbeispiel 1

| | |
|---|---|
| Alkydharz | 24 Gew.% |
| Alkydharz thixotrop | 2 Gew.% |
| Füllstoffe | 16 Gew.% |
| Pigmente / Farbstoffe | 32 Gew.% |
| Additive: Netz- / Dispergiermittel, Entlüfter, Entschäumer, Gleit- / Verlaufsadditive, Hautverhinderungsmittel, Lichtschutzmittel, Radikalfänger, etc. | 4,8 Gew.% |
| Mattierungsmittel (amorphe Kieselsäure) | 3,0 Gew.% |
| Lösemittel | 17,8 Gew.% |
| Eisen-Primärtrockner (in Bezug auf Metallanteil) | 0,0003 Gew.% |
| Zirconium-Sikkativ (Hilfstrockner) | 0,2 Gew.% |
| Calcium-Sikkativ (Durchtrockner) | 0,2 Gew.% |

Das Referenzbeispiel 1 enthält kein Wasser und deswegen auch keinen Emulgator. Das Mattierungsmittel Polyethylen-Wachs wurde gegen amorphe Kieselsäure ausgetauscht.

Als Referenzbeispiel 2 wurde in der erfindungsgemäßen Rezeptur für den Weißlack seidenmatt das Mattierungsmittel Polyethylen-Wachs gegen amorphe Kieselsäure ausgetauscht, sowie anstelle des Eisen-Primärtrockners ein herkömmlicher Kobalt-Primärtrockner in üblicher Menge eingesetzt.

Die Beschichtungsmassen (erfindungsgemäß, Referenzbeispiel 1 und Referenzbeispiel 2) wurden mit einem 75 µm Rakel aufgezogen und mit einem Drying Recorder untersucht. Die erfindungsgemäße Beschichtungszusammensetzung war nach ca. 3,5 Stunden ausreichend getrocknet; das Referenzbeispiel 2 nach ca. 8 Stunden. Beim Referenzbeispiel 1 dagegen war nach 24 Stunden immer noch keine Trocknung festzustellen, die Untersuchung wurde abgebrochen.

### Ausführungsbeispiel 2:

### Flächenlasur weiß: erfindungsgemäß

| | |
|---|---|
| Alkydharz | 28 Gew.% |
| Alkydharz thixotrop | 12 Gew.% |
| Wasser | 14 Gew.% |
| Emulgator | 2 Gew.% |
| Pigmente / Farbstoffe | 8 Gew.% |
| Additive: Netz- / Dispergiermittel, Entlüfter, Entschäumer, Gleit- / Verlaufsadditive, Hautverhinderungsmittel, Lichtschutzmittel, Radikalfänger, etc. | 3,6 Gew.% |
| Mattierungsmittel | 2,0 Gew.% |
| Lösemittel | 30 Gew.% |
| Eisen-Primärtrockner (in Bezug auf Metallanteil) | 0,0004 Gew.% |
| Zirconium-Sikkativ (Hilfstrockner) | 0,25 Gew.% |
| Calcium-Sikkativ (Durchtrockner) | 0,15 Gew.% |

Die aus den erfindungsgemäßen Beschichtungsmassen erhaltenen Beschichtungen zeigen keine Verfärbungstendenzen. Auch ist von praktischer Relevanz, dass sich mit den erfindungsgemäßen Beschichtungsmassen Filmhärten einstellen lassen, wie sie sich üblicherweise bei Einsatz herkömmlicher Kobalt-basierter Primärtrockner einstellen.

Ein weiterer Vorteil der erfindungsgemäßen Beschichtungsmassen ist die Senkung des VOC-Gehalts. Es muss weniger Lösemittel eingesetzt werde, weil ein Teil davon durch Wasser substituiert wird. Beispielsweise gelangt man mit den erfindungsgemäßen Beschichtungsmassen für dekorative Anwendungen sogar zu VOC-Werten unterhalb von 300 g/L. Für die Bestimmung des Gehalts an flüchtigen organischen Verbindungen (VOC-Gehalt) kann auf die Norm DIN EN ISO 11890-1 (September 2007) zurückgegriffen werden.

## Patentansprüche

1. Lösemittelhaltige Beschichtungsmasse für Lackbeschichtungen und Lasuren, insbesondere für Bautenlacke oder Bestandteile hiervon, enthaltend oder bestehend aus
mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz,
mindestens einem Primärtrockner basierend auf Eisen, insbesondere umfassend oder bestehend aus mindestens einem organischen Salz des Eisens und/oder einer Komplexverbindung des Eisens, insbesondere einem Komplexsalz des Eisens,
mindestens einem ersten Sekundärtrockner, insbesondere umfassend oder bestehend aus mindestens einem organischen und/oder anorganischen Salz bzw. einer Verbindung des Zirkoniums, Magnesiums, Calciums, Strontiums, Bariums, Zinks, Lithiums oder Aluminiums,
mindestens einem zweiten Sekundärtrockner, umfassend oder bestehend aus mindestens einem organischen Salz des Calciums, Zirkoniums und einer beliebigen Mischung hiervon, wobei der erste und der zweite Sekundärtrockner unterschiedlich sind,
Lösemittel,
2-40 Gew% Wasser,
mindestens einem Emulgator,
gegebenenfalls mindestens einem üblichen Additiv.

2. Beschichtungsmasse nach Anspruch 1, die im Wesentlichen frei von Cobalt- und Manganverbindungen, besonders von Sikkativen auf Basis von Cobalt und Mangan ist.

3. Beschichtungsmasse nach einem der vorangehenden Ansprüche, **dadurch gekennzeichnet, dass** das oxidativ trocknende organische Bindemittel ferner mindestens einen oxidativ trocknenden modifizierten mittelöligen und/oder langöligen Alkydharz, insbesondere ausgewählt aus der Gruppe bestehend aus silikonisierten Alkydharzen, acrylierten Alkydharzen, Isocyanat-modifzierten Alkydharzen und beliebigen Mischungen hiervon, insbesondere Isocyanatmodifzierte langöliges Alkydharze, umfasst.

4. Beschichtungsmasse nach einem der vorangehenden Ansprüche, **dadurch gekennzeichnet, dass** das Lösemittel, insbesondere aromatenfreie, aliphatische Kohlenwasserstoffe, vorzugsweise ausgewählt aus der Gruppe bestehend aus, insbesondere entaromatisiertem Testbenzin, n-Paraffinen, Isoparaffinen, Cycloparaffinen und beliebigen Mischungen hiervon, umfasst oder hieraus besteht und vorzugsweise Methoxypropoxypropanol als Co-Lösemittel enthält.

5. Beschichtungsmasse nach einem der vorangehenden Ansprüche, **dadurch gekennzeichnet, dass** das Additiv ausgewählt ist aus der Gruppe bestehend aus Entschäumern, Lichtschutzmitteln, Radikalfängern, Netzmitteln, Dispergiermitteln, Oberflächenadditiven, insbesondere Silikonoberflächenadditiven, beispielsweise polyethermodifiziertes Polymethylakylsiloxan und/oder Silikonpolyether-Copolymere und/oder oberflächenaktive Polyacrylate, Mattierungsmitteln, insbesondere Wachse, und beliebigen Mischungen dieser Verbindungen.

6. Beschichtungsmasse nach einem der vorangehenden Ansprüche, **dadurch gekennzeichnet, dass** das organische Salz des ersten und/oder zweiten Sekundärtrockners Neodecanoate, Oleate, Stearate Palmitate, Octoate und/oder Naphtenate, insbesondere Neodeconoate, umfasst, besonders bevorzugt Zirkonium- und/oder Strontiumneodecanoate.

7. Beschichtungsmasse nach einem der vorangehenden Ansprüche, **dadurch gekennzeichnet, dass** der Langölanteil der oxidativ trocknenden langöliges Alkydharze auf Linolsäure, Linolensäure, Ölsäure und Palmitinsäure, basiert und/oder dass der Mittelölanteil der oxidativ trocknenden mittelöligen Alkydharze auf Linolsäure, Linolensäure und/oder Ölsäure und gegebenenfalls unter Zusatz von Palmitinsäure, insbesondere Linolsäure, Linolensäure, Ölsäure und Palmitinsäure, basiert.

8. Beschichtungsmasse nach einem der vorangehenden Ansprüche, **dadurch gekennzeichnet, dass** die Beschichtungsmasse im Wesentlichen frei von amorphem Siliziumdioxid und SiO₂-basierten Verbindungen ist.

9. Beschichtungsmasse nach einem der vorangehenden Ansprüche, **dadurch gekennzeichnet, dass** der Anteil an dem Primärtrockner basierend auf Eisen, in Bezug auf dessen Metallanteil, im Bereich von 0,0001 bis 0,3 Gewichtsprozent, bevorzugt im Bereich von 0,0001 bis 0,1 Gewichtsprozent und besonders bevorzugt im Bereich von 0,0001 bis 0,05 Gewichtsprozent liegt, jeweils bezogen auf das Gesamtgewicht der Beschichtungsmasse.

10. Beschichtungsmasse nach einem der vorangehenden Ansprüche, **dadurch gekennzeichnet, dass** der Anteil an dem mindestens einen ersten Sekundärtrockner umfassend oder bestehend aus mindestens einem organischen Salz des Zirkoniums, Strontiums, Calciums, Magnesiums, Bariums, Zinks, Lithiums und/oder Aluminiums, in Bezug auf dessen Metallanteil, im Bereich von 0,005 bis 1,5 Gewichtsprozent, bevorzugt im Bereich von 0,025 bis 1,0 Gewichtsprozent und besonders bevorzugt im Bereich von 0,05 bis 0,8 Gewichtsprozent liegt, jeweils bezogen auf das Gesamtgewicht an oxidativ trocknendem organischen Bindemitteln.

11. Beschichtungsmasse nach einem der vorangehenden Ansprüche, **dadurch gekennzeichnet, dass** der Anteil an dem mindestens einen zweiten Sekundärtrockner umfassend oder bestehend aus mindestens einem organischen Salz des Calciums, Lithiums, Zirkoniums und einer beliebigen Mischung, in Bezug auf dessen Metallanteil, hiervon im Bereich von 0,005 bis 1,5 Gewichtsprozent, bevorzugt im Bereich von 0,01 bis 3,0 Gewichtsprozent und besonders bevorzugt im Bereich von 0,025 bis 0,8 Gewichtsprozent liegt, jeweils bezogen auf das Gesamtgewicht an oxidativ trocknendem organischen Bindemitteln.

12. Beschichtungsmasse nach einem der vorangehenden Ansprüche, **dadurch gekennzeichnet, dass** der Anteil an Lösemittel im Bereich von 0,1 bis 40 Gewichtsprozent, bevorzugt 0,2 bis 35 Gewichtsprozent und besonders bevorzugt im Bereich von 3 bis 30 Gewichtsprozent, bezogen auf das Gesamtgewicht der Beschichtungsmasse liegt.

13. Beschichtungsmasse nach einem der Ansprüche 1 bis 12, mit einem Gehalt an mindestens einem Emulgator, vorzugsweise einem polymeren Emulgator und besonders bevorzugt einem Emulgator auf Basis eines filmbildenden Polysaccharidharzes, speziell in einer Einsatzmenge von 0,1-10 Gew.%, besser 0,2-8 Gew%, noch besser 0,25-5 Gew%.

14. Beschichtungsmasse nach einem der Ansprüche 1 bis 13, mit einem Wassergehalt von 3-35 Gew%, besser 4-30 Gew%, am besten 4-10 Gew%.

15. Beschichtungsmasse nach einem der vorangehenden Ansprüche, mit einer Pigment-Volumen-Konzentration (PVK) gemäß EN ISO 4618-1 von 0 bis 50%, mehr bevorzugt 2 bis 45%, besonders bevorzugt 4 bis 40% auf.

16. Beschichtung auf einem Substrat, insbesondere Decklackbeschichtung, Grundierungsbeschichtung, Grundierungs-/Decklack-1-Topf-Beschichtung oder transparente oder semitransparente Endbeschichtung, erhalten oder erhältlich durch Auftragen und physikalisches und chemisches Trocknen der Beschichtungsmasse gemäß einem der Ansprüche 1 bis 15.

17. Beschichtung nach Anspruch 16, **dadurch gekennzeichnet, dass** diese über eine durchschnittliche, insbesondere absolute, Trockenschichtdicke, bestimmt gemäß DIN EN ISO 2808-2 (Mai 2017), nicht oberhalb von 100 um, bevorzugt nicht oberhalb von 80 um und besonders bevorzugt im Bereich von 5 bis 60 um verfügt.

18. Verwendung einer Beschichtungsmasse gemäß einem der Ansprüche 1 bis 15 für die Herstellung von Lasuren und Lackbeschichtungen.

19. Verfahren zur Herstellung einer Beschichtungsmasse gemäß einem der Ansprüche 1 bis 15, bei dem zunächst aus Alkydharz, Lösemittel, Wasser und Emulgator sowie ggf. Additiven wie Entschäumer und Entlüfter eine Wasser-in-Öl-Emulsion hergestellt wird und diese dann zur Erzeugung der Beschichtungsmasse mit einem entsprechenden Anteil einer herkömmlichen lösemittelhaltigen und wasserfreien Alkydharz-Formulierung vereinigt wird.

## Claims

1. A solvent-containing coating compound for paint coatings and varnishes, in particular for architectural paints or components thereof, containing or consisting of
at least one oxidatively drying organic binder, selected from the group consisting of at least one oxidatively drying middle oil and/or long oil alkyd resin, in particular an oxidatively drying long oil alkyd resin,
at least one primary drier based on iron, in particular comprising or consisting of at least one organic salt of iron and/or a coordination complex of iron, in particular a complex salt of iron,
at least one first secondary drier, in particular comprising or consisting of at least one organic and/or inorganic salt or a compound of zirconium, magnesium, calcium, strontium, barium, zinc, lithium or aluminium,
at least one second secondary drier, comprising or consisting of at least one organic salt of calcium, zirconium and any mixture thereof, wherein the first and the second secondary drier are different,
solvent,
2-40% by weight of water,
at least one emulsifying agent,
optionally, at least one conventional additive.

2. The coating compound as claimed in claim 1, which is substantially free from cobalt compounds and manganese compounds, particularly from siccatives based on cobalt and manganese.

3. The coating compound as claimed in one of the preceding claims, **characterized in that** the oxidatively drying organic binder further comprises at least one oxidatively drying modified middle oil and/or long oil alkyd resin, in particular selected from the group consisting of siliconized alkyd resins, acrylated alkyd resins, isocyanate-modified alkyd resins and any mixtures thereof, in particular isocyanate-modified long oil alkyd resins.

4. The coating compound as claimed in one of the preceding claims, **characterized in that** the solvent comprises or consists of, in particular, aromatics-free aliphatic hydrocarbons, preferably selected from the group consisting of, in particular, dearomatized white spirit, n-paraffins, isoparaffins, cycloparaffins and any mixtures thereof, and preferably contains methoxypropoxypropanol as a co-solvent.

5. The coating compound as claimed in one of the preceding claims, **characterized in that** the additive is selected from the group consisting of defoaming agents, light stabilizers, radical scavengers, wetting agents, dispersing agents, surface additives, in particular silicone surface additives, for example polyether-modified polymethylalkylsiloxane and/or silicone polyether copolymers and/or surface active polyacrylates, matting agents, in particular waxes, and any mixtures of these compounds.

6. The coating compound as claimed in one of the preceding claims, **characterized in that** the organic salt of the first and/or second secondary drier comprises neodecanoates, oleates, stearates, palmitates, octoates and/or naphthenates, in particular neodecanoates, particularly preferably zirconium neodecanoate and/or strontium neodecanoate.

7. The coating compound as claimed in one of the preceding claims, **characterized in that** the long oil fraction of the oxidatively drying long oil alkyd resins is based on linoleic acid, linolenic acid, oleic acid and palmitic acid, and/or **in that** the middle oil fraction of the oxidatively drying middle oil alkyd resins is based on linoleic acid, linolenic acid and/or oleic acid and optionally with the addition of palmitic acid, in particular linoleic acid, linolenic acid, oleic acid and palmitic acid.

8. The coating compound as claimed in one of the preceding claims, **characterized in that** the coating compound is substantially free from amorphous silicon dioxide and SiO₂-based compounds.

9. The coating compound as claimed in one of the preceding claims, **characterized in that** the fraction of the primary drier based on iron, with respect to its metallic fraction, is in the range of 0.0001 to 0.3 percent by weight, preferably in the range of 0.0001 to 0.1 percent by weight and particularly preferably in the range of 0.0001 to 0.05 percent by weight, respectively with respect to the total weight of the coating compound.

10. The coating compound as claimed in one of the preceding claims, **characterized in that** the fraction of the at least one first secondary drier comprising or consisting of at least one organic salt of zirconium, strontium, calcium, magnesium, barium, zinc, lithium and/or aluminium, with respect to its metallic fraction, is in the range of 0.005 to 1.5 percent by weight, preferably in the range of 0.025 to 1.0 percent by weight and particularly preferably in the range of 0.05 to 0.8 percent by weight, respectively with respect to the total weight of oxidatively drying organic binders.

11. The coating compound as claimed in one of the preceding claims, **characterized in that** the fraction of the at least one second secondary drier comprising or consisting of at least one organic salt of calcium, lithium, zirconium and any mixture thereof, with respect to its metallic fraction, is in the range of 0.005 to 1.5 percent by weight, preferably in the range of 0.01 to 3.0 percent by weight and particularly preferably in the range of 0.025 to 0.8 percent by weight, respectively with respect to the total weight of oxidatively drying organic binders.

12. The coating compound as claimed in one of the preceding claims, **characterized in that** the fraction of solvent is in the range of 0.1 to 40 percent by weight, preferably 0.2 to 35 percent by weight and particularly preferably in the range of 3 to 30 percent by weight, with respect to the total weight of the coating compound.

13. The coating compound as claimed in one of claims 1 to 12, with a content of at least one emulsifying agent, preferably a polymeric emulsifying agent and particularly preferably an emulsifying agent based on a film-forming polysaccharide resin which in particular is in a quantity for use of 0.1 - 10% by weight, preferably 0.2 - 8% by weight, more preferably 0.25 - 5% by weight.

14. The coating compound as claimed in one of claims 1 to 13, with a water content of 3 - 35% by weight, preferably 4 - 30% by weight, most preferably 4 - 10% by weight.

15. The coating compound as claimed in one of the preceding claims, with a pigment-volume concentration (PVC), in accordance with EN ISO 4618-1, of 0 to 50%, more preferably 2 to 45%, particularly preferably 4 to 40%.

16. A coating on a substrate, in particular a cover coating, primer coating, primer-/cover-1-pot coating or transparent or semi-transparent final coating, obtained or obtainable by application and physical and chemical drying of the coating compound in accordance with one of claims 1 to 15.

17. The coating as claimed in claim 16, **characterized in that** it has an average, in particular absolute, dry layer thickness, determined in accordance with DIN EN ISO 2808-2 (May 2017), which is not over 100 µm, preferably not over 80 µm and particularly preferably in the range of 5 to 60 µm.

18. Use of a coating compound as claimed in one of claims 1 to 15 for the production of varnishes and paint coatings.

19. A method for the production of a coating compound as claimed in one of claims 1 to 15, in which firstly, a water-in-oil emulsion is produced from alkyd resin, solvent, water and emulsifying agent as well as optional additives such as defoaming agents and deaerators, and in order to produce the coating compound, this is then combined with an appropriate proportion of a conventional solvent-containing and anhydrous alkyd resin formulation.

## Revendications

1. Masse de revêtement contenant du solvant, destinée à des revêtements de vernis et des lasures, notamment à des peintures de bâtiment ou à des constituants de ces dernières, contenant ou étant constituée de
au moins un liant organique à séchage oxydatif, choisi dans le groupe constitué d'au moins une résine alkyde moyenne en huile et/ou longue en huile à séchage oxydatif, s'agissant notamment d'une résine alkyde longue en huile à séchage oxydatif,
au moins un agent de séchage primaire à base de fer, comprenant notamment au moins un sel organique de fer et/ou un complexe de fer, notamment un sel de complexe de fer, ou en étant constitué,
au moins un premier agent de séchage secondaire, comprenant notamment au moins un sel organique et/ou inorganique, et/ou un composé de zirconium, magnésium, calcium, strontium, baryum, zinc, lithium ou aluminium, ou en étant constitué,
au moins un deuxième agent de séchage secondaire, comprenant au moins un sel organique de calcium, zirconium ou tout mélange de ceux-ci, ou en étant constitué, le premier et le deuxième agents de séchage secondaire étant différents,
solvant,
2 à 40 % en poids d'eau,
au moins un émulsifiant,
éventuellement, au moins un additif usuel.

2. Masse de revêtement selon la revendication 1, qui est sensiblement exempte de composés de cobalt et de manganèse, notamment de dessiccants à base de cobalt et de manganèse.

3. Masse de revêtement selon l'une des revendications précédentes, **caractérisée en ce que** le liant organique à séchage oxydatif comprend en outre au moins une résine alkyde moyenne en huile et/ou longue en huile modifiée à séchage oxydatif qui est notamment choisie dans le groupe constitué de résines alkyde siliconisées, résines alkyde acrylées, résines alkyde modifiées à l'isocyanate et de leurs mélanges, s'agissant notamment de résines alkyde longues en huile modifiées à l'isocyanate.

4. Masse de revêtement selon l'une des revendications précédentes, **caractérisée en ce que** ledit solvant comprend notamment des hydrocarbures aliphatiques exempts de groupes aromatiques ou en est constitué, choisis préférentiellement dans le groupe constitué notamment de white spirit désaromatisé, n-paraffines, isoparraffines, cycloparaffines et de tout mélange de ceux-ci, et contient préférentiellement du méthoxypropoxypropanol en tant que co-solvant.

5. Masse de revêtement selon l'une des revendications précédentes, **caractérisée en ce que** ledit additif est choisi dans le groupe constitué d'agents anti-mousse, agents anti-UV, agents anti-radicalaires, agents mouillants, agents de dispersion, additifs de surface, s'agissant notamment d'agents de surface de silicone, par exemple de polyméthylalkylsiloxane modifié au polyéther et/ou de copolymères de silicone-polyéther et/ou de polyacrylates à activité surfacique, agents matifiants, s'agissant notamment de cires, et de tout mélange de ces composés.

6. Masse de revêtement selon l'une des revendications précédentes, **caractérisée en ce que** le sel organique du premier et/ou du deuxième agent de séchage secondaire comprend des néodécanoates, oléates, stéarates, palmitates, octoates et/ou des naphthéates, s'agissant notamment de néodécanoates, avec une préférence particulière de néodécanoates de zirconium et/ou de strontium.

7. Masse de revêtement selon l'une des revendications précédentes, **caractérisée en ce que** la partie longue en huile des résines alkyde longues en huile à séchage oxidatif est à base d'acide linolique, acide linoléique, acide oléique et d'acide palmitique et/ou que la partie moyenne en huile des résines alkyde moyennes en huile à séchage oxydatif est à base d'acide linolique, acide linoléique et/ou d'acide oléique, et comporte éventuellement de l'acide palmitique ajouté, notamment d'acide linolique, acide linoléique, acide oléique et d'acide palmitique.

8. Masse de revêtement selon l'une des revendications précédentes, **caractérisée en ce que** la masse de revêtement est sensiblement exempte de dioxyde de silicium amorphe et de composés à base de SiO₂.

9. Masse de revêtement selon l'une des revendications précédentes, caractérisée ce que la proportion d'agent de séchage primaire à base de fer, en ce qui concerne sa partie métallique, est comprise entre 0,0001 et 0,3 pour cent en poids, préférentiellement comprise entre 0,0001 et 0,1 pour cent en poids et, avec une préférence particulière, comprise entre 0,0001 et 0,05 pour cent en poids, à chaque instance par rapport au poids total de la masse de revêtement.

10. Masse de revêtement selon l'une des revendication précédentes, **caractérisée en ce que** la proportion de l'au moins un premier agent de séchage secondaire qui comprend au moins un sel organique de zirconium, strontium, calcium, magnésium, baryum, zinc, lithium et/ou d'aluminium ou en est constitué, est comprise, en ce qui concerne sa partie métallique, entre 0,005 et 1,5 pour cent en poids, préférentiellement comprise entre 0,025 et 1,0 pour cent en poids et, avec une préférence particulière, comprise entre 0,05 et 0,8 pour cent en poids, à chaque instance par rapport au poids total des liants organiques à séchage oxydatif.

11. Masse de revêtement selon l'une des revendication précédentes, **caractérisée en ce que** la proportion de l'au moins un deuxième agent de séchage secondaire qui comprend au moins un sel organique de calcium, lithium, zirconium et tout mélange de ceux-ci ou en est constitué, est comprise, en ce qui concerne sa partie métallique, entre 0,005 et 1,5 pour cent en poids, préférentiellement comprise entre 0,01 et 3,0 pour cent en poids et, avec une préférence particulière, comprise entre 0,025 et 0,8 pour cent en poids, à chaque instance par rapport au poids total des liants organiques à séchage oxydatif.

12. Masse de revêtement selon l'une des revendications précédentes, **caractérisée en ce que** la proportion de solvant est comprise entre 0,1 et 40 pour cent en poids, préférentiellement entre 0,2 et 35 pour cent en poids et, avec une préférence particulière, entre 3 et 30 pour cent en poids, par rapport au poids total de la masse de revêtement.

13. Masse de revêtement selon l'une des revendications 1 à 12, dont la teneur en un au moins émulsifiant, s'agissant préférentiellement d'un émulsifiant polymère et, avec une préférence particulière, d'un émulsifiant à base d'une résine de polysaccharide filmogène, correspond à une quantité mise en œuvre qui est, en particulier, comprise entre 0,1 et 10 % en poids, mieux 0,2 et 8 % en poids, mieux encore 0,25 à 5 % en poids.

14. Masse de revêtement selon l'une des revendications 1 à 13 dont la teneur en eau est comprise entre 3 et 35 % en poids, mieux 4 à 30 % en poids, idéalement 4 à 10 % en poids.

15. Masse de revêtement selon l'un des revendications précédentes, **caractérisée en ce qu'**elle présente une concentration pigmentaire volumique (C.P.V.) selon EN ISO 4618-1 comprise entre 0 et 50 %, plus préférentiellement 2 et 45 %, avec une préférence particulière 4 à 40 %.

16. Revêtement sur un substrat, s'agissant notamment d'un revêtement de vernis de couverture, revêtement de sous-couche, revêtement de sous-couche / vernis de couverture en un seul récipient ou d'un revêtement de finition transparent ou semi-transparent, obtenu ou pouvant être obtenu par application puis séchage physique ou chimique d'une masse de revêtement selon l'une des revendications 1 à 15.

17. Revêtement selon la revendication 16, **caractérisé en ce qu'**il dispose d'une épaisseur de film sec moyenne, notamment en valeur absolue, déterminée selon DIN EN ISO 2808-2 (mai 2017), inférieure ou égale à 100 µm, préférentiellement inférieure ou égale à 80 µm et, avec une préférence particulière, comprise entre 5 et 60 µm.

18. Utilisation d'une masse de revêtement selon l'une des revendications 1 à 15 pour fabriquer des lasures et des revêtements de vernis.

19. Procédé de préparation d'une masse de revêtement selon l'une des revendications 1 à 15, dans lequel on prépare d'abord une émulsion eau dans huile à partir de résine alkyde, solvant, eau, et émulsifiant ainsi qu'éventuellement des additifs tels que les agents anti-mousse et les agents désaérateurs, pour ensuite la combiner avec une proportion correspondante d'une formulation conventionnelle de résine alkyde qui contient du solvant tout en étant exempte d'eau, afin de produire ladite masse de revêtement.
